# EUROPEAN PATENT SPECIFICATION

(11) **EP 0 967 126 B1**
(45) Date of publication and mention of the grant of the patent: **22.01.2003**
(21) Application number: 99304865.1
(22) Date of filing: 22.06.1999
(51) Int. Cl.: B60R 21/16

(54) **Protective bag for vehicle occupant's head**
Airbag für den Kopfschutz von Fahrzeuginsassen
Coussin de protection de la tête d'un passager de véhicule

(30) Priority: 23.06.1998 JP 17598698
(43) Date of publication of application: 29.12.1999
(73) Proprietor: TAKATA CORPORATION, Minato-ku, Tokyo (JP)
(72) Inventor: Kokeguchi, Akira, Tokyo (JP); Masuda, Yasushi, Tokyo (JP); Nakanishi, Ryosuke, Tokyo (JP)
(74) Representative: Jenkins, Peter David

(56) References cited:
- EP-A- 0 841 221
- EP-A- 0 900 704
- DE-U- 29 605 896
- DE-U- 29 709 389

## Description

The present invention relates to a protective bag for a vehicle occupant's head and, more particularly, to a bag which can be inflated along a window of a side door in the event of a lateral impact or roll-over situation. In detail, it relates to a protective bag for a vehicle occupant's head comprising two sheets which are superposed on each other and joined together along their peripheries to form a vacancy extending in a longitudinal direction of a vehicle, wherein the two sheets are connected to each other by a connecting line within the vacancy.

A protective bag for a vehicle occupant's head is disclosed in WO96/26087, particularly, Fig. 1 and Fig. 9 thereof. The bag has a vacancy comprising a duct extending from a front end to a rear end thereof and a plurality of cells communicated with the duct and extending downwardly. Between the adjacent cells, an occupant-side sheet and a vehicle body-side sheet are joined.

According to the bag disclosed in WO96/26087, gas flows into the duct through a rear end thereof so that the cells are inflated in order from the rearmost one in a longitudinal direction of the vehicle. Therefore, the frontmost cell is inflated with significant time lag behind the rearmost cell.

EP-A-0900704, which is prior art according to Article (54) 3 EPC,discloses a head-protecting air bag apparatus comprising: an air bag which is adapted to be fixed to a vehicle body so that the air bag extends from a pillar along a roof side rail and one of a front end and a rear end of which is fixed to an inflator, characterized in that the air bag comprises: at an intermediate portion thereof, a plurality of noninflatable portions which intersect a tension line connecting the front and rear ends when the air bag is expanded, extend in a substantially vertical direction, and are located at a roof side region corresponding to the roof side rail; and a pillar guide portion comprising a portion corresponding to the pillar and an extended portion extending to a noninflatable portion of the plurality of noninflatable portions which is adjacent to the one end.

EP-A-0841221 discloses a structure for arrangement of an occupant protective apparatus for a vehicle which includes: an inflator disposed at a predetermined position of a vehicle body and adapted to eject a gas at a time of a side collision when a high load is applied to a side of the vehicle body; a bag stored in a folded state in such a manner as to extend between a front pillar and a roof side rail and adapted to be inflated in a shape of a curtain below the roof side rail in a vehicle compartment by a gas supplied from the inflator, the bag being disposed in a space formed between a base member of the pillar garnish and the pillar inner panel respectively the roof head lining and the rail inner panel; and an energy absorbing member provided in the space and disposed in close proximity to the bag so as to absorb an impact from the inner side of the vehicle compartment.

It is an aim of the present invention to provide a protective bag for a vehicle occupant's head, in which time lag between each part of the bag is small so that the bag can be quickly inflated as a whole.

According to a first aspect of the present invention there is provided a protective bag for a vehicle occupant's head, which is arranged about a corner between a ceiling and a side of a vehicle cabin and is designed to be inflated with introduced gas downwardly along said side, said protective bag comprising an occupant-side sheet and a vehicle body-side sheet which are superposed on each other and joined together along their peripheries to form a vacancy to be supplied with the gas through a gas inlet of said bag, said vacancy being elongated in the longitudinal direction of the vehicle and said sheets being partly joined to each other within the vacancy by a plurality of connecting lines, wherein said vacancy comprises a main chamber and an introduction chamber communicating with an upper portion of a front side of said main chamber, and wherein one of said connecting lines is a lateral connecting line which extends laterally in the longitudinal direction of the bag from the front side of the main chamber toward the rear side of said main chamber, said lateral connecting line is situated in the upper area of the main chamber, and said lateral connecting line is directly connected to the front and upper side of the main chamber and extends toward the rear side to form an upper cell between an upper side of the main chamber and the lateral connecting line whereby in use a gas from the introduction chamber is introduced directly toward the rear side of the main chamber through the upper cell, wherein the plurality of connecting lines further includes a plurality of vertical connecting lines situated in the main chamber, a first one of the vertical connecting lines is connected to the rear end of the lateral connecting line and extends downwardly, and a second one of the vertical connecting lines is connected to the midway of the lateral connecting line and extends downwardly, and wherein the lower ends of said vertical connecting lines are spaced apart from a lower side of said main chamber.

According to a second aspect of the present invention there is provided a protective bag for a vehicle occupant's head, which is arranged about a corner between a ceiling and a side of a vehicle cabin and is designed to be inflated with introduced gas downwardly along said side, said protective bag comprising an occupant-side sheet and a vehicle body-side sheet which are superposed on each other and joined together along their peripheries to form a vacancy to be supplied with the gas through a gas inlet of said bag, said vacancy being elongated in the longitudinal direction of the vehicle and said sheets being partly joined to each other within the vacancy by a plurality of connecting lines, wherein said vacancy comprises a main chamber and an introduction chamber communicating with an upper portion of a front side of said main chamber, and wherein the plurality of connecting lines include a first lateral connecting line which is connected to the front and upper side of the main chamber and extends laterally in the longitudinal direction of the bag from the front side of the main chamber toward the rear side of said main chamber, and a second lateral connecting line which is positioned in the extended line of said first lateral connecting line, the first and second lateral connecting lines forming an upper cell between an upper side of the main chamber and the lateral connecting lines whereby in use a gas from the introduction chamber is introduced directly toward the rear side of the main chamber through the upper cell, and the plurality of connecting lines further include a plurality of vertical connecting lines situated in the main chamber, one of the vertical connecting lines is joined to the first lateral connecting line and extends downwardly, and another of the vertical connecting lines is joined to the second lateral connecting line and extends downwardly therefrom,

According to a third aspect of the present invention there is provided a protective bag for a vehicle occupant's head, which is arranged about a corner between a ceiling and a side of a vehicle cabin and is designed to be inflated with introduced gas downwardly along said side, said protective bag comprising an occupant-side sheet and a vehicle body-side sheet which are superposed on each other and joined together along their peripheries to form a vacancy to be supplied with the gas through a gas inlet of said bag, said vacancy being elongated in the longitudinal direction of the vehicle and said sheets being partly joined to each other within the vacancy by a plurality of connecting lines, wherein said vacancy comprises a main chamber and an introduction chamber communicating with an upper portion of a front side of said main chamber, and wherein the plurality of connecting lines include a first lateral connecting line which is connected to the front and upper side of the main chamber and extends laterally in the longitudinal direction of the bag from the front side of the main chamber toward the rear side of said main chamber to form an upper cell between an upper side of the main chamber and the lateral connecting line whereby in use a gas from the introduction chamber is introduced directly toward the rear side of the main chamber through the upper cell, and a second lateral connecting line which is disposed under said first lateral connecting line, a front end of said second lateral connecting line being apart from the front side of said main chamber, and a rear end of said second lateral connecting line is apart from the rear side of said main chamber.

In an embodiment of the invention, the introduction chamber is joined to the upper portion of the front side of the main chamber and the connecting line extends backwards from the front side of the main chamber.

According to the protective bag for a vehicle occupant's head of the present invention, gas introduced from the introduction chamber into the main chamber flows along the connecting line and turns around or along the end of the connecting line to flow below the connecting line. After the gas flows in an upper portion of the main chamber and inflates the entire upper portion of the main chamber, the gas sufficiently inflates the respective cells under the connecting line, thereby inflating each cell with little delay from another.

Embodiments of the present invention will now be described by way of example only, with reference to the accompanying drawings, in which:-
Fig. 1a is a front view of a protective bag for a vehicle occupant's head according to a first embodiment, Fig. 1b is a sectional view taken along a line B-B of Fig. 1a, Fig. 1c is a sectional view taken along a line C-C of Fig. 1a;
Fig. 2 is a structural view of a protective bag for a vehicle occupant's head according to a second embodiment;
Fig. 3 is a structural view of a protective bag for a vehicle occupant's head according to a third embodiment;
Fig. 4 is a structural view of a protective bag for a vehicle occupant's head according to a fourth embodiment;
Fig. 5 is a structural view of a protective bag for a vehicle occupant's head according to a fifth embodiment;
Fig. 6 is a structural view of a protective bag for a vehicle occupant's head according to a sixth embodiment; and
Fig. 7 is a structural view of a protective bag for a vehicle occupant's head according to a seventh embodiment.

Hereinafter, preferred embodiments of the present invention will be described with reference to the attached drawings.

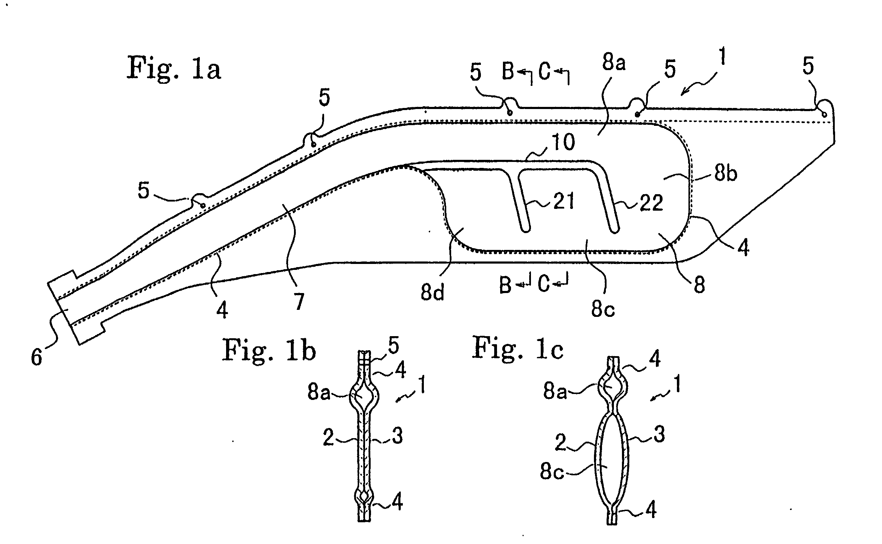

Fig. 1a is a front view showing a protective bag for a vehicle occupant's head according to a first embodiment, Fig. 1b and Fig. 1c are sectional views taken along lines B-B and C-C of Fig. 1a, respectively.

The bag 1 comprises an occupant-side sheet 2 and a window-side sheet, that is a vehicle body-side sheet, 3 which are superposed on each other and joined together along their peripheries so as to form a vacancy, consisting of an introduction chamber 7 or path and a main chamber 8, between the sheets 2 and 3. The sheets 2, 3 are joined along the peripheries by seams having stitches 4. But the sheets may be joined by another means including adhesives, fusion bond, or the like. In order to mount the bag 1 to a roof side member and an A pillar (not shown) of a vehicle, the bag 1 is provided with projections on the upper side thereof and through-holes 5 formed in the respective projections for inserting fixtures such as rivets therethrough.

The introduction chamber 7 extends along the A pillar and has a gas inlet 6 formed in the front end. The rear end of the introduction chamber 7 communicates with an upper portion of the front side of the main chamber 8. The sheets 2, 3 have extensions extending downward from the chamber 7. Bottoms of the extensions are located at the same level as a bottom of the chamber 8 or lower than it. Either of the sheets 2, 3 may have the extension.

Within the main chamber 8, the sheets 2, 3 are joined to each other by a lateral connecting line 10 and a vertical connecting lines 21, 22. These lines may be formed by sewing, adhesion, fusion bond or the like.

The connecting line 10 is elongated from the lower edge of the introduction chamber 7 on the front side of the main chamber 8 and extends rearwardly therefrom in the substantially horizontal direction. The rear end of the connecting line 10 is spaced apart from the rear side of the main chamber 8.

The vertical connecting line 22 extends downward from the rear end of the lateral line 10 and the vertical line 21 extends downward from a portion on the way of the lateral line 10. The lower ends of the vertical lines 21, 22 are spaced apart from the lower side of the main chamber 8. The main chamber 8 is divided into four cells 8a, 8b, 8c and 8d. The cells 8b, 8c and 8d communicate with each other through portions beneath the vertical lines 21, 22.

The bag 1 is installed in such a state that the front portion including the introduction chamber 7 is folded along the A pillar of the vehicle and the rear portion including the main chamber 8 is folded along a roof side rail (not shown) of the vehicle.

The folded bag 1 is enclosed by a cover, which is designed to be torn when the bag 1 is inflated.

As the vehicle comes in lateral collision or roll-over, an inflator (not shown) is actuated so that gas flows into the introduction chamber 7 through the gas inlet 6. The gas enters into the main chamber 8 through the introduction chamber 7. The gas flows rearwardly (to the right in Fig. 1a) in the cell 8a positioned above the lateral connecting line 10 and extending in the longitudinal direction of the vehicle, and enters into the cell 8b at the rear side of the vertical connecting line 22 and then into the cells 8c, 8d through the portion beneath the vertical lines 22, 21.

Since the cells 8a, 8b are first inflated with gas from the introduction chamber 7, the upper portion of the bag 1 can be inflated almost simultaneously in the longitudinal direction with no or very little time delay. After that, the cells 8c, 8d are inflated. When the upper portion of the bag 1 is inflated at substantially the same time from the front side to the rear side, the cover enclosing the bag 1 is torn along the longitudinal direction of the vehicle so that the cells 8c, 8d can be quickly inflated along at least one of the window and the door of the vehicle.

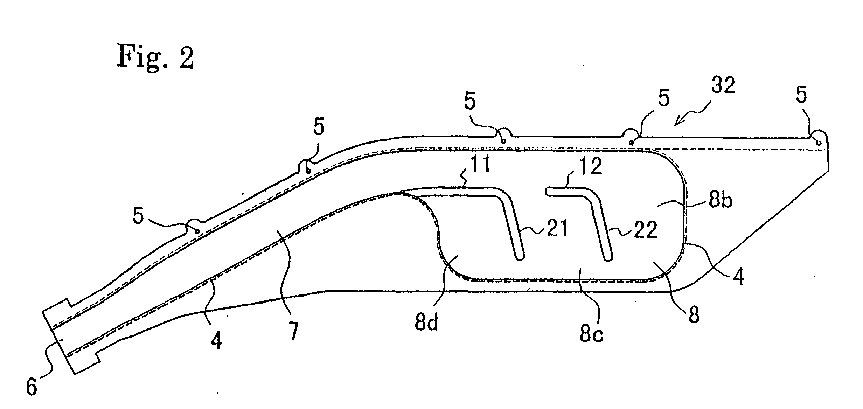

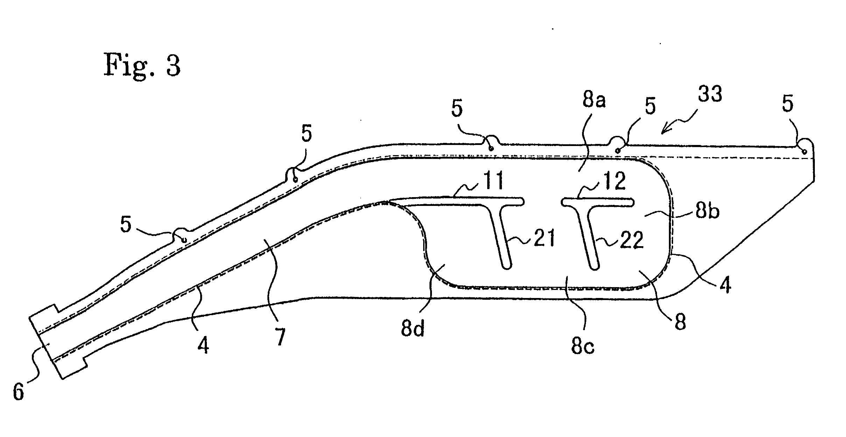

Figs. 2 and 3 are front views of bags 32, 33 according to second and third embodiments, respectively. In these embodiments, two connecting lines 11, 12 are provided to be spaced apart from each other as the lateral connecting lines. The line 12 is positioned in the extended line of the line 11.

In Fig. 2, vertical lines 21, 22 extend from the rear ends of the lateral lines 11, 12 in such a manner that the joined lines 11 and 21, the lines 12 and 22 form together L-shaped configurations, respectively. In Fig. 3, vertical lines 21, 22 extend downwardly from portions on the ways of the lateral lines 11, 12 in such a manner that the joined lines 11 and 21, lines 12 and 22 form together T-shaped configurations, respectively.

The bags 32, 33 shown in Figs. 2, 3 can also be rapidly inflated as well as the bag 1 shown in Fig. 1.

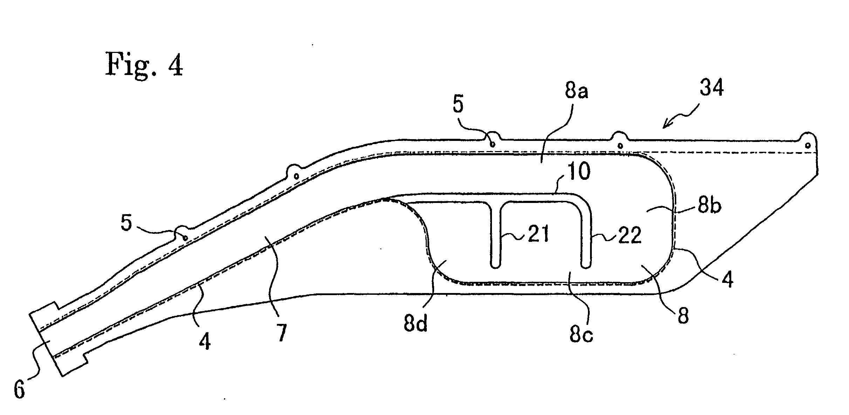

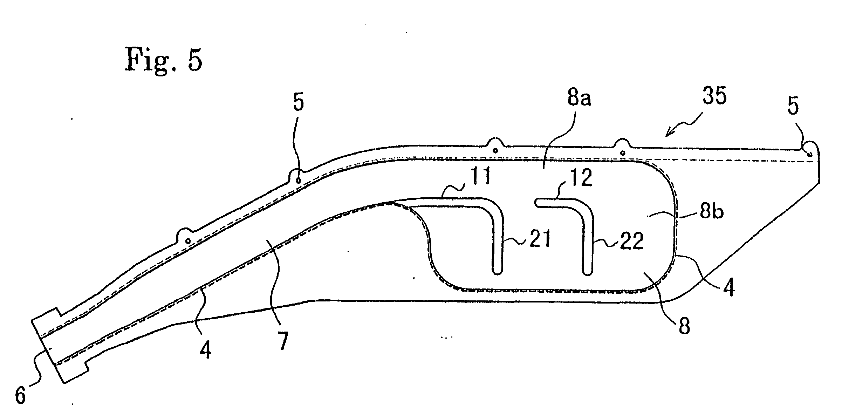

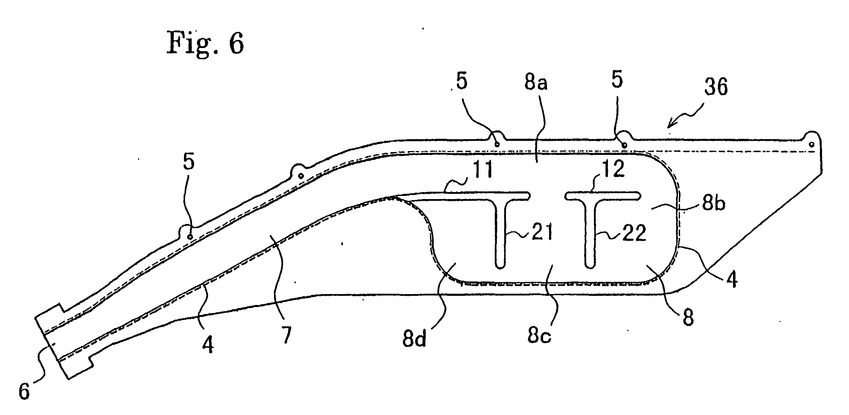

Though the vertical lines 21, 22 extend obliquely so that their lower ends become nearer the rear of the vehicle in Figs. 1a through 3, the lines 21, 22 may extend almost vertically as shown in Figs. 4 through 6 where bags 34, 35, 36 have substantially vertical lines.

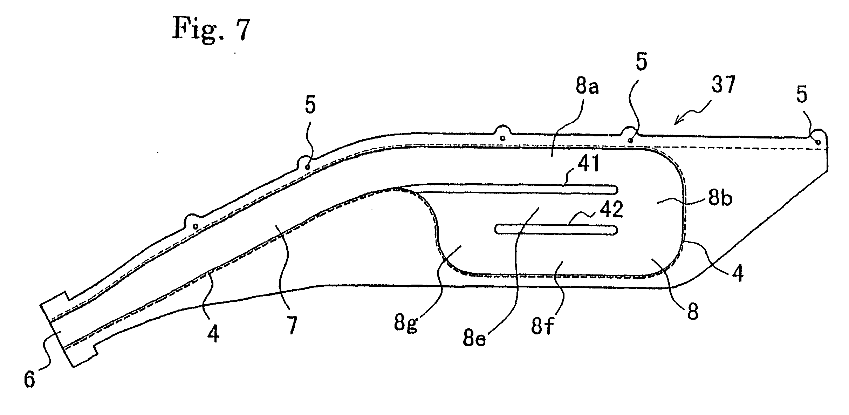

Fig. 7 is a front view of a bag 37 according to still another embodiment. The bag 37 has only two lateral connecting lines 41, 42. The upper lateral line 41 is connected to the lower edge of the introduction chamber 7 on the front side of the main chamber 8 and extends rearwardly therefrom in the substantially horizontal direction and is spaced apart from the rear side of the main chamber 8.

The lower lateral line 42 extends in substantially parallel with the upper lateral line 41.

The front and rear ends of the lower connecting line 42 are spaced apart from the front side and the rear side of the main chamber 8, respectively.

When gas is introduced from the inflator into the gas inlet 6 of the bag 37, the gas flows from the cell 8a above the line 41 to the cell 8b. Then, the gas flows to a cell 8e between the lateral lines 41 and 42 and a cell 8f under the line 42 at the same time and then flows to a cell 8g in front of the line 42.

The bag 37 can also be rapidly inflated as well as the respective bags 1, 32 through 36.

Though the introduction chamber 7 is arranged along the A pillar and the main chamber 8 is arranged on a lateral side of a front seat in the above embodiments, the introduction chamber 7 may be arranged along a C pillar and the main chamber 8 may be arranged on a lateral side of a rear seat.

The main chamber 8 may be elongated to cover the lateral side of the front seat and the lateral side of the rear seat. In this case, the introduction chamber 7 may be arranged along either the A pillar or the C pillar.

As described above, the protective bag for a vehicle occupant's head of the present invention can be inflated quickly as a whole, compared with a conventional one. Therefore, an inflator with small capacity can be employed.

## Claims

1. A protective bag (1) for a vehicle occupant's head, which is arranged about a comer between a ceiling and a side of a vehicle cabin and is designed to be inflated with introduced gas downwardly along said side, said protective bag (1) comprising an occupant-side sheet (2) and a vehicle body-side sheet (3) which are superposed on each other and joined together along their peripheries to form a vacancy to be supplied with the gas through a gas inlet of said bag, said vacancy being elongated in the longitudinal direction of the vehicle and said sheets (2, 3) being partly joined to each other within the vacancy by a plurality of connecting lines, wherein said vacancy comprises a main chamber (8) and an introduction chamber (7) communicating with an upper portion of a front side of said main chamber (8), and wherein one of said connecting lines is a lateral connecting line (10) which extends laterally in the longitudinal direction of the bag (1) from the front side of the main chamber (8) toward the rear side of said main chamber (8), said lateral connecting line (10) is situated in the upper area of the main chamber (8), and said lateral connecting line (10) is directly connected to the front and upper side of the main chamber (8) and extends toward the rear side to form an upper cell (8a) between an upper side of the main chamber (8) and the lateral connecting line (10) whereby in use a gas from the introduction chamber (7) is introduced directly toward the rear side of the main chamber (8) through the upper cell (8a), wherein the plurality of connecting lines further includes a plurality of vertical connecting lines (21, 22) situated in the main chamber, a first one of the vertical connecting lines (22) is connected to the rear end of the lateral connecting line (10) and extends downwardly, and a second one of the vertical connecting lines (21) is connected to the midway of the lateral connecting line (10) and extends downwardly, and wherein the lower ends of said vertical connecting lines (21, 22) are spaced apart from a lower side of said main chamber (8).

2. A protective bag for a vehicle occupant's head as claimed in claim 1, said connecting lines are made by sewing, adhesion, or fusion bond.

3. A protective bag for a vehicle occupant's head as claimed in claim 1 or claim 2, further including through-holes which are formed in an upper portion of said bag for inserting fixtures for mounting said bag therethrough.

4. A protective bag (1) for a vehicle occupant's head, which is arranged about a corner between a ceiling and a side of a vehicle cabin and is designed to be inflated with introduced gas downwardly along said side, said protective bag (1) comprising an occupant-side sheet (2) and a vehicle body-side sheet (3) which are superposed on each other and joined together along their peripheries to form a vacancy to be supplied with the gas through a gas inlet of said bag, said vacancy being elongated in the longitudinal direction of the vehicle and said sheets (2, 3) being partly joined to each other within the vacancy by a plurality of connecting lines, wherein said vacancy comprises a main chamber (8) and an introduction chamber (7) communicating with an upper portion of a front side of said main chamber (8), and wherein the plurality of connecting lines include a first lateral connecting line (11) which is connected to the front and upper side of the main chamber (8) and extends laterally in the longitudinal direction of the bag (1) from the front side of the main chamber (8) toward the rear side of said main chamber (8), and a second lateral connecting line (12) which is positioned in the extended line of said first lateral connecting line, the first and second lateral connecting lines (11, 12) forming an upper cell (8a) between an upper side of the main chamber (8) and the lateral connecting lines (11, 12) whereby in use a gas from the introduction chamber (7) is introduced directly toward the rear side of the main chamber (8) through the upper cell (8a), and the plurality of connecting lines further include a plurality of vertical connecting lines (21, 22) situated in the main chamber, one of the vertical connecting lines (21) is joined to the first lateral connecting line (11) and extends downwardly, and another of the vertical connecting lines (22) is joined to the second lateral connecting line (10) and extends downwardly therefrom.

5. A protective bag for a vehicle occupant's head as claimed in claim 4, said connecting lines are made by sewing, adhesion, or fusion bond.

6. A protective bag for a vehicle occupant's head as claimed in claim 4 or claim 5, further including through-holes which are formed in an upper portion of said bag for inserting fixtures for mounting said bag therethrough.

7. A protective bag (1) for a vehicle occupant's head, which is arranged about a corner between a ceiling and a side of a vehicle cabin and is designed to be inflated with introduced gas downwardly along said side, said protective bag (1) comprising an occupant-side sheet (2) and a vehicle body-side sheet (3) which are superposed on each other and joined together along their peripheries to form a vacancy to be supplied with the gas through a gas inlet of said bag, said vacancy being elongated in the longitudinal direction of the vehicle and said sheets (2, 3) being partly joined to each other within the vacancy by a plurality of connecting lines, wherein said vacancy comprises a main chamber (8) and an introduction chamber (7) communicating with an upper portion of a front side of said main chamber (8), and wherein the plurality of connecting lines include a first lateral connecting line (41) which is connected to the front and upper side of the main chamber (8) and extends laterally in the longitudinal direction of the bag (1) from the front side of the main chamber (8) toward the rear side of said main chamber (8) to form an upper cell (8a) between an upper side of the main chamber (8) and the lateral connecting line (41) whereby in use a gas from the introduction chamber (7) is introduced directly toward the rear side of the main chamber (8) through the upper cell (8a), and a second lateral connecting line which is disposed under said first lateral connecting line (41), a front end of said second lateral connecting line being apart from the front side of said main chamber, and a rear end of said second lateral connecting line is apart from the rear side of said main chamber.

8. A protective bag for a vehicle occupant's head as claimed in claim 7, said connecting lines are made by sewing, adhesion, or fusion bond.

9. A protective bag for a vehicle occupant's head as claimed in claim 7 or claim 8, further including through-holes which are formed in an upper portion of said bag for inserting fixtures for mounting said bag therethrough.

## Patentansprüche

1. Schutzsack (1) für den Kopf eines Fahrzeuginsassen, der an einer Ecke zwischen einer Decke und einer Seite eines Fahrzeuginnenraums angeordnet ist und mit eingeleitetem Gas nach unten an der Seite aufgeblasen wird, wobei der Schutzsack (1) eine Bahn (2) auf der Insassenseite und eine Bahn (3) auf der Fahrzeugkarosserieseite umfasst, die übereinandergelegt und an ihren Rändern miteinander verbunden sind, so dass ein Hohlraum entsteht, dem über einen Gaseinlass des Sackes das Gas zugeführt wird, wobei der Hohlraum in der Längsrichtung des Fahrzeugs verlängert ist, und die Bahnen (2, 3) innerhalb des Hohlraums durch eine Vielzahl von Verbindungslinien teilweise miteinander verbunden sind, wobei der Hohlraum eine Hauptkammer (8) und eine Einleitkammer (7) umfasst, die mit einem oberen Abschnitt einer Vorderseite der Hauptkammer (8) in Verbindung steht, und wobei eine der Verbindungslinien eine horizontale Verbindungslinie (10) ist, die sich horizontal in der Längsrichtung des Sacks (1) von der Vorderseite der Hauptkammer (8) zur Rückseite der Hauptkammer (8) erstreckt, wobei sich die horizontale Verbindungslinie (10) im oberen Bereich der Hauptkammer (8) befindet und die horizontale Verbindungslinie (10) direkt mit der Vorder- und der Oberseite der Hauptkammer (8) verbunden ist, und sich zur Rückseite hin erstreckt, und so eine obere Zelle (8a) zwischen einer Oberseite der Hauptkammer (8) und der horizontalen Verbindungslinie (10) bildet, so dass in Funktion ein Gas aus der Einleitkammer (7) über die obere Zelle (8a) direkt zur Rückseite der Hauptkammer (8) eingeleitet wird, wobei die Vielzahl von Verbindungslinien des Weiteren eine Vielzahl vertikaler Verbindungslinien (21, 22) enthält, die sich in der Hauptkammer befinden, und eine erste der vertikalen Verbindungslinien (22) mit dem hinteren Ende der horizontalen Verbindungslinie (10) verbunden ist und sich nach unten erstreckt, und eine zweite der vertikalen Verbindungslinien (21) mit der Mitte der horizontalen Verbindungslinie (10) verbunden ist und sich nach unten erstreckt, und wobei die unteren Enden der vertikalen Verbindungslinien (21, 22) von einer Unterseite der Hauptkammer (8) beabstandet sind.

2. Schutzsack für den Kopf eines Fahrzeuginsassen nach Anspruch 1, wobei die Verbindungslinien durch Nähen, Kleben oder Schmelzverbinden hergestellt werden.

3. Schutzsack für den Kopf eines Fahrzeuginsassen nach Anspruch 1 oder 2, der des Weiteren Durchgangslöcher enthält, die in einem oberen Abschnitt des Sacks ausgebildet sind, um Befestigungen zum Anbringen des Sacks durch sie hindurch einzuführen.

4. Schutzsack (1) für den Kopf eines Fahrzeuginsassen, der an einer Ecke zwischen einer Decke und einer Seite eines Fahrzeuginnenraums angeordnet ist und mit eingeleitetem Gas nach unten an der Seite aufgeblasen wird, wobei der Schutzsack (1) eine Bahn (2) auf der Insassenseite und eine Bahn (3) auf der Fahrzeugkarosserieseite umfasst, die übereinandergelegt und an ihren Rändern miteinander verbunden sind, so dass ein Hohlraum entsteht, dem über einen Gaseinlass des Sackes das Gas zugeführt wird, wobei der Hohlraum in der Längsrichtung des Fahrzeugs verlängert ist und die Bahnen (2, 3) innerhalb des Hohlraums durch eine Vielzahl von Verbindungslinien teilweise miteinander verbunden sind, wobei der Hohlraum eine Hauptkammer (8) und eine Einleitkammer (7) umfasst, die mit einem oberen Abschnitt einer Vorderseite der Hauptkammer (8) in Verbindung steht, und wobei die Vielzahl von Verbindungslinien eine erste horizontale Verbindungslinie (11), die mit der Vorder- und der Oberseite der Hauptkammer (8) verbunden ist und sich horizontal in der Längsrichtung des Sacks (1) von der Vorderseite der Hauptkammer (8) zur Rückseite der Hauptkammer (8) erstreckt, und eine zweite horizontale Verbindungslinie (12) enthält, die auf der verlängerten Linie der ersten horizontalen Verbindungslinie angeordnet ist, wobei die erste und die zweite horizontale Verbindungslinie (11, 12) eine obere Zelle (8a) zwischen einer Oberseite der Hauptkammer (8) und den Querverbindungslinien (11, 12) bilden, so dass in Funktion ein Gas aus der Einleitkammer (7) über die obere Zelle (8a) direkt zur Rückseite der Hauptkammer (8) eingeleitet wird, und die Vielzahl von Verbindungslinien des Weiteren eine Vielzahl vertikaler Verbindungslinien (21, 22) enthält, die sich in der Hauptkammer befinden, wobei eine der vertikalen Verbindungslinien (21) mit der ersten horizontalen Verbindungslinie (11) verbunden ist und sich nach unten erstreckt, und eine andere der vertikalen Verbindungslinien (22) mit der zweiten horizontale Verbindungslinie (10) verbunden ist und sich von ihr aus nach unten erstreckt.

5. Schutzsack für den Kopf eines Fahrzeuginsassen nach Anspruch 4, wobei die Verbindungslinien durch Nähen, Kleben oder Schmelzverbinden hergestellt werden.

6. Schutzsack für den Kopf eines Fahrzeuginsassen nach Anspruch 4 oder Anspruch 5, der des Weiteren Durchgangslöcher enthält, die in einem oberen Abschnitt des Sacks ausgebildet sind, um Befestigungen zum Anbringen des Sacks durch sie hindurch einzuführen.

7. Schutzsack (1) für den Kopf eines Fahrzeuginsassen, der an einer Ecke zwischen einer Decke und einer Seite eines Fahrzeuginnenraums angeordnet ist und mit eingeleitetem Gas nach unten an der Seite aufgeblasen wird, wobei der Schutzsack (1) eine Bahn (2) auf der Insassenseite und eine Bahn (3) auf der Fahrzeugkarosserieseite umfasst, die übereinandergelegt und an ihren Rändern miteinander verbunden sind, so dass ein Hohlraum entsteht, dem über einen Gaseinlass des Sackes das Gas zugeführt wird, wobei der Hohlraum in der Längsrichtung des Fahrzeugs verlängert ist und die Bahnen (2, 3) innerhalb des Hohlraums durch eine Vielzahl von Verbindungslinien teilweise miteinander verbunden sind, wobei der Hohlraum eine Hauptkammer (8) und eine Einleitkammer (7) umfasst, die mit einem oberen Abschnitt einer Vorderseite der Hauptkammer (8) in Verbindung steht, und wobei die Vielzahl von Verbindungslinien eine erste horizontale Verbindungslinie (41), die mit der Vorder- und der Oberseite der Hauptkammer (8) verbunden ist und sich horizontal in der Längsrichtung des Sacks (1) von der Vorderseite der Hauptkammer (8) zur Rückseite der Hauptkammer (8) erstreckt, und dass eine obere Zelle (8a) zwischen einer Oberseite der Hauptkammer (8) und der horizontalen Verbindungslinie (41) bildet, so dass in Funktion ein Gas aus der Einleitkammer (7) über die obere Zelle (8a) direkt zur Rückseite der Hauptkammer (8) eingeleitet wird, und eine zweite horizontale Verbindungslinie enthält, die unter der ersten horizontalen Verbindungslinie (41) angeordnet ist, wobei ein vorderes Ende der zweiten horizontalen Verbindungslinie von der Vorderseite der Hauptkammer getrennt ist und ein hinteres Ende der zweiten horizontalen Verbindungslinie von der Rückseite der Hauptkammer getrennt ist.

8. Schutzsack für den Kopf eines Fahrzeuginsassen nach Anspruch 7, wobei die Verbindungslinien durch Nähen, Kleben oder Schmelzverbinden hergestellt werden.

9. Schutzsack für den Kopf eines Fahrzeuginsassen nach Anspruch 7 oder Anspruch 8, der des Weiteren Durchgangslöcher enthält, die in einem oberen Abschnitt des Sacks ausgebildet sind, um Befestigungen zum Anbringen des Sacks durch sie hindurch einzuführen.

## Revendications

1. Coussin protecteur (1) pour la tête d'un occupant d'un véhicule, qui est agencé autour d'un angle entre un plafond et un côté d'un compartiment à passager d'un véhicule et est conçu pour être gonflé avec un gaz introduit vers le bas le long dudit côté, ledit coussin protecteur (1) comportant une feuille (2) du côté d'un occupant et une feuille (3) du côté de la carrosserie du véhicule qui sont superposées l'une à l'autre et reliées l'une à l'autre le long de leurs périphéries pour former un espace libre destiné à recevoir le gaz par l'intermédiaire d'une entrée de gaz dudit coussin, ledit espace libre étant allongé dans la direction longitudinale du véhicule et lesdites feuilles (2, 3) étant reliées partiellement l'une à l'autre à l'intérieur de l'espace libre par plusieurs lignes de liaison, dans lequel ledit espace libre comprend une chambre principale (8) et une chambre d'introduction (7) communiquant avec une partie supérieure d'un côté avant de ladite chambre principale (8), et dans lequel l'une desdites lignes de liaison est une ligne de liaison latérale (10) qui s'étend latéralement dans la direction longitudinale du coussin (1) depuis le côté avant de la chambre principale (8) vers le côté arrière de ladite chambre principale (8), ladite ligne de liaison latérale (10) est située dans la zone supérieure de la chambre principale (8), et ladite ligne de liaison latérale (10) est reliée directement au côté avant et supérieur de la chambre principale (8) et s'étend vers le côté arrière pour former une cellule supérieure (8a) entre un côté supérieur de la chambre principale (8) et la ligne de liaison latérale (10), grâce à quoi, lors de l'utilisation, un gaz provenant de la chambre (7) d'introduction est introduit directement vers le côté arrière de la chambre principale (8) à travers la cellule supérieure (8a), dans lequel la pluralité de lignes de liaison comprend en outre une pluralité de lignes de liaison verticales (21, 22) situées dans la chambre principale, une première des lignes de liaison verticales (22) est reliée à l'extrémité arrière de la ligne de liaison horizontale (10) et s'étend vers le bas, et une deuxième des lignes de liaison verticales (21) est reliée au milieu de la ligne de liaison latérale (10) et s'étend vers le bas, et dans lequel les extrémités inférieures desdites lignes de liaison verticales (21, 22) sont espacées d'un côté inférieur de ladite chambre principale (8).

2. Coussin protecteur pour la tête d'un occupant de véhicule selon la revendication 1, dans lequel lesdites lignes de liaison sont formées par couture, collage ou liaison par fusion.

3. Coussin protecteur pour la tête d'un occupant de véhicule selon la revendication 1 ou la revendication 2, présentant en outre des trous traversants qui sont formés dans une partie supérieure dudit coussin pour l'introduction d'accessoires pour le montage dudit coussin à travers eux.

4. Coussin protecteur (1) pour la tête d'un occupant d'un véhicule, qui est agencé autour d'un angle entre un plafond et un côté d'un compartiment à passager d'un véhicule et qui est conçu pour être gonflé à l'aide d'un gaz introduit vers le bas le long dudit côté, ledit coussin protecteur (1) comportant une feuille (2) du côté de l'occupant et une feuille (3) du côté de la carrosserie du véhicule qui sont superposées l'une à l'autre et jointes l'une à l'autre le long de leurs périphéries pour former un espace libre devant recevoir le gaz à travers une entrée de gaz dudit coussin, ledit espace libre étant allongé dans la direction longitudinale du véhicule et lesdites feuilles (2, 3) étant partiellement jointes l'une à l'autre à l'intérieur de l'espace libre par une pluralité de lignes de liaison, dans lequel ledit espace libre comprend une chambre principale (8) et une chambre d'introduction (7) communiquant avec une partie supérieure d'un côté avant de ladite chambre principale (8), et dans lequel la pluralité de lignes de liaison comprend une première ligne de liaison latérale (11) qui est reliée au côté avant et supérieur de la chambre principale (8) et s'étend latéralement dans la direction longitudinale du coussin (1) depuis le côté avant de la chambre principale (8) vers le côté arrière de ladite chambre principale (8), et une seconde ligne de liaison latérale (12) qui est positionnée dans le prolongement de ladite première ligne de liaison latérale, les première et seconde lignes de liaison latérales (11, 12) formant une cellule supérieure (8a) entre un côté supérieur de la chambre principale (8) et les lignes de liaison latérales (11, 12), grâce à quoi, lors de l'utilisation, un gaz provenant de la chambre d'introduction (7) est introduit directement vers le côté arrière de la chambre principale (8) à travers la cellule supérieure (8a), et la pluralité de lignes de liaison comprend en outre une pluralité de lignes de liaison verticales (21, 22) situées dans la chambre principale, l'une des lignes de liaison verticales (21) est jointe à la première ligne de liaison latérale (11) et s'étend vers le bas, et une autre des lignes de liaison verticales (22) est jointe à la seconde ligne de liaison latérale (10) et s'étend vers le bas de celle-ci.

5. Coussin protecteur pour la tête d'un occupant d'un véhicule selon la revendication 4, lesdites lignes de liaison étant formées par couture, collage ou liaison par fusion.

6. Coussin protecteur pour la tête d'un occupant d'un véhicule selon la revendication 4 ou la revendication 5, présentant en outre des trous traversants qui sont formés dans une partie supérieure dudit coussin pour l'introduction d'accessoires pour le montage dudit coussin par l'intermédiaire de ceux-ci.

7. Coussin protecteur (1) pour la tête d'un occupant d'un véhicule, qui est agencé autour d'un angle entre un plafond et un côté d'un compartiment à passager d'un véhicule et est conçu pour être gonflé avec un gaz introduit vers le bas le long dudit côté, ledit coussin protecteur (1) comportant une feuille (2) du côté de l'occupant et une feuille (3) du côté de la carrosserie du véhicule qui sont superposées l'une à l'autre et jointes l'une à l'autre le long de leurs périphéries pour former un espace libre devant recevoir le gaz à travers une entrée de gaz dudit coussin, ledit espace libre étant allongé dans la direction longitudinale du véhicule et lesdites feuilles (2, 3) étant partiellement jointes l'une à l'autre à l'intérieur de l'espace libre par une pluralité de lignes de liaison, dans lequel ledit espace libre comprend une chambre principale (8) et une chambre d'introduction (7) communiquant avec une partie supérieure d'un côté avant de ladite chambre principale (8), et dans lequel la pluralité de lignes de liaison comprend une première ligne de liaison latérale (41) qui est reliée au côté avant et supérieur de la chambre principale (8) et s'étend latéralement dans la direction longitudinale du coussin (1) depuis le côté avant de la chambre principale (8) vers le côté arrière de ladite chambre principale (8) pour former une cellule supérieure (8a) entre un côté supérieur de la chambre principale (8) et la ligne de liaison latérale (41), grâce à quoi, lors de l'utilisation, un gaz provenant de la chambre d'introduction (7) est introduit directement vers le côté arrière de la chambre principale (8) à travers la cellule supérieure (8a), et une seconde ligne de liaison latérale qui est disposée en dessous de ladite première ligne de liaison latérale (41), une extrémité avant de ladite seconde ligne de liaison latérale étant espacée du côté avant de ladite chambre principale, et une extrémité arrière de ladite seconde ligne de liaison latérale étant espacée du côté arrière de ladite chambre principale.

8. Coussin protecteur pour la tête d'un occupant d'un véhicule selon la revendication 7, lesdites lignes de liaison étant formées par couture, collage ou liaison par fusion.

9. Coussin protecteur pour la tête d'un occupant d'un véhicule selon la revendication 7 ou la revendication 8, présentant en outre des trous traversants qui sont formés dans une partie supérieure dudit coussin pour l'introduction d'accessoires pour le montage dudit coussin par l'intermédiaire de ceux-ci.
